# FASCICULE DE BREVET EUROPEEN

(11) **EP 1 355 711 B1**
(45) Date de publication et mention de la délivrance du brevet: **07.06.2006**
(21) Numéro de dépôt: 01990619.7
(22) Date de dépôt: 28.12.2001
(51) Int. Cl.: B01D 29/21, B01D 29/96, B01D 27/06, B01D 27/08

(54) **FILTRE POUR LA DEPOLLUTION PARTICULAIRE DES FLUIDES**
FILTER ZUM SCHUTZ VOR TEILCHENVERUNREINGUNG VON FLUIDEN
FILTER FOR PARTICULATE POLLUTION CONTROL OF FLUIDS

(30) Priorité: 28.12.2000 FR 0017150
(43) Date de publication de la demande: 29.10.2003
(73) Titulaire: Vasilescu, Dan, 92200 Neuilly-sur-Seine (FR)
(72) Inventeur: Vasilescu, Dan, 92200 Neuilly-sur-Seine (FR)
(74) Mandataire: Hammond, William
(86) Numéro de dépôt international: PCT/FR2001/004226
(87) Numéro de publication internationale: WO 2002/053258

(56) Documents cités:
- EP-A- 0 442 365
- US-A- 6 053 334
- US-A- 6 146 527

## Description

La présente invention est relative à un filtre pour la dépollution particulaire des fluides, notamment dans le domaine de l'automobile, et élément filtrant le composant

La dépollution particulaire des fluides (liquides ou gaz) est le plus souvent réalisée au moyen d'un filtre qui est en général constitué d'une cuve, d'une tête de filtre sur laquelle est fixée cette cuve et d'un élément filtrant contenu dans cette cuve. Ce filtre est raccordé à un circuit qui assure le passage du fluide à dépolluer à travers l'élément filtrant. Le sous-ensemble constitué par la cuve et l'élément filtrant sera dénommé par la suite ensemble de filtration.

Traditionnellement, l'élément filtrant comprend une structure de résistance et une matière filtrante. La structure de résistance est souvent constituée par un noyau cylindrique, généralement en une tôle perforée ou en un matériau plastique perforé, solidaire de deux coupelles situées chacune à une extrémité de ce noyau cylindrique. Ces coupelles sont munies de joints d'étanchéité dont la nature, la forme et l'emplacement sont adaptés au montage prévu lors de la conception.

La matière filtrante est de nature très diverse : tissu (métallique, plastique, textile), feutre (fibres en matière plastique, fibres de verre) ou papier. Elle est en général pliée en accordéon et disposée de manière uniforme autour ou à l'intérieur de la structure de résistance, tel qu'un noyau cylindrique. Selon la méthode de fabrication mise en oeuvre, la matière filtrante peut être solidaire ou non des coupelles. Dans le premier cas, lorsque la matière filtrante non régénérable est colmatée, il suffit de remplacer cet élément filtrant ; dans le second cas, il suffit d'éliminer la matière filtrante en gardant le noyau cylindrique.

L'élément filtrant est disposé dans une cuve qui est, comme mentionné ci-dessus, montée de façon amovible et étanche sur la tête de filtre, ce qui permet de changer soit le seul élément filtrant, soit l'ensemble de filtration (élément filtrant-cuve).

Les éléments filtrants sont construits selon un cahier des charges qui prévoit un certain nombre de performances, ce qui détermine leurs caractéristiques telles que : les cotes principales, le dimensionnement du noyau central, le mode de réalisation de l'étanchéité, le sens d'écoulement du fluide, le nombre de couches de la matière filtrante et les caractéristiques de celle-ci, etc..

Ainsi, deux éléments filtrants ayant les mêmes cotes mais provenant de deux fabrications différentes, donc répondant à des cahiers des charges différents, n'auront pas, en règle générale, les mêmes performances. Ceci pose un problème à la fois de nature technique et économique pour les raisons suivantes :
- la durée de vie des équipements peut atteindre plusieurs dizaines d'années et pendant cette période il y aura de nombreuses opérations de maintenance nécessitant de changer les éléments filtrants. Si les éléments filtrants de rechange n'arrivent pas à assurer une dépollution correcte ou bien si les pertes de charge sont trop importantes, cela entraînera des défaillances qui seront coûteuses pour les utilisateurs.
- l'utilisation de copies d'éléments filtrants entraîne des manques à gagner pour les fabricants.
- pour des raisons évidentes d'optimisation économique, les fabricants de filtres essayent de standardiser au maximum les dimensions des éléments filtrants. Ainsi, on trouve chez tous les fabricants de filtres des éléments filtrants dont la matière filtrante présente des caractéristiques très différentes mais dont les cotes sont identiques. La dépollution obtenue en utilisant ces éléments filtrants qui peuvent être montés dans un même cuve, sera également très différente ; ceci constitue une importante source de défaillance des composants des circuits de dépollution : il existe donc un problème pour identifier les éléments filtrants de rechange, nonobstant les indications d'identification qu'ils peuvent comporter.

Certes, on connaît un filtre tel que celui décrit dans le document US-A-6 146 527 : celui-ci comporte une coupelle avec trois ergots mais qui ont le même rôle qu'un écrou anti-vol pour boulon de voiture.

Aussi un des buts de la présente invention est-il de fournir un filtre pour la dépollution particulaire des fluides, qui permet d'assurer un remplacement sûr et sécurisé de tout ou partie de ce filtre.

Un autre but de l'invention est de fournir un tel filtre à un coût économique aussi proche que possible que celui des filtres actuels.

Un but supplémentaire de la présente invention est de garantir, aux utilisateurs, des filtres ou des éléments constitutifs de ceux-ci présentant les performances de ceux d'origine.

Ces buts, ainsi que d'autres qui apparaîtront par la suite, sont atteints par un filtre pour la dépollution particulaire des fluides, notamment dans le domaine de l'automobile, comprenant, d'une part, un boîtier constitué d'une tête de filtre et d'une cuve montée de façon amovible et étanche sur celle-ci, et, d'autre part, un élément filtrant situé dans cette cuve et constitué d'une structure de résistance et d'une matière filtrante supportée par cette structure, deux coupelles étant disposées aux extrémités de cette structure de résistance lequel filtre est caractérisé, selon la présente invention, par le fait qu'il comporte au moins un détrompeur qui comprend une tige solidaire du boîtier et un espace ménagé dans la matière filtrante et dans lequel pénètre cette tige lors du montage de l'élément filtrant. Dans au moins une coupelle est prévu un orifice pour le passage de la tige.

Avantageusement, l'espace est formé par un pli plus large de la matière filtrante. Par exemple, on dispose au moins une agrafe à dos large qui réunit les bords d'extrémité de la matière filtrante afin de créer un volume délimité par la forme de celle-ci et par les deux coupelles.

Selon un autre mode de réalisation, l'espace est matérialisé par un tube qui est fixé par une de ses extrémités sur une des coupelles et est disposé au sein de la matière filtrante ; l'autre extrémité du tube est située en regard d'un orifice ménagé dans cette autre coupelle

De préférence, la tige est rendue solidaire par une de ses extrémités d'une entretoise, dite entretoise porte-tige, qui est fixée de manière indémontable sur un manchon que comporte la tête de filtre.

Selon une variante de réalisation, la tige est rendue solidaire de la cuve.

La présente invention concerne aussi un élément filtrant pour un tel filtre qui est constitué d'une structure de résistance et d'une matière filtrante pliée en accordéon supportée par cette structure, un espace étant ménagé dans cette matière filtrante.

Avantageusement, cet espace est formé par un pli plus large que les autres plis de la matière filtrante.

Selon un mode réalisation préféré, on dispose au moins une agrafe à dos large qui réunit les bords d'extrémité de la matière filtrante, afin de créer un volume.

La description qui va suivre et qui ne présente aucun caractère limitatif, doit être lue en regard des figures annexées, parmi lesquelles :
- la figure 1 est une vue éclatée d'un filtre pour la dépollution particulaire des fluides comprenant une cuve, une tête de filtre sur laquelle est fixée cette cuve et un élément filtrant ;
- la figure 2 est une vue avec demi-coupe verticale partielle d'un élément filtrant selon l'art antérieur ;
- la figure 3 est une vue en demi-coupe verticale d'un élément filtrant selon la présente invention ;
- la figure 4 est une vue en coupe d'un élément filtrant selon la ligne IV-IV de la figure 3 ;
- la figure 5 est une vue en coupe horizontale d'un élément filtrant selon une variante de réalisation de la présente invention représentée à la figure 2;
- la figure 6a est une demi-vue en coupe verticale d'un ensemble de filtration selon un premier mode de réalisation de la présente invention en cours de montage ;
- la figure 6b correspond à la figure 6a, une fois le montage terminé ;
- la figure 7a est une demi-vue en coupe verticale d'un ensemble de filtration selon un second mode de réalisation de la présente invention, en cours de montage ; et,
- la figure 7b correspond à la figure 7a, une fois le montage terminé.

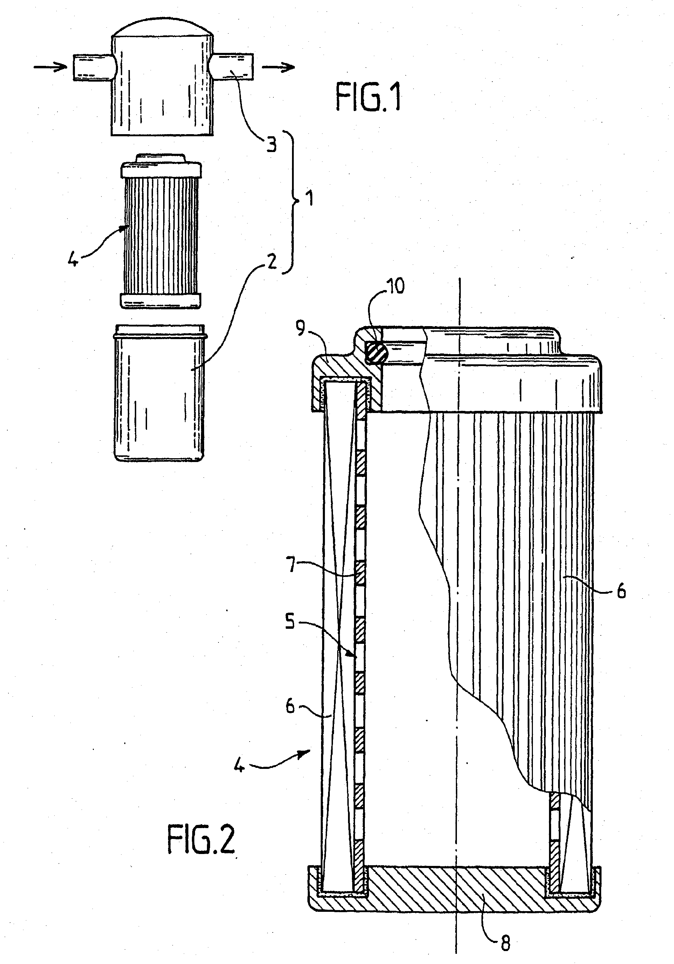

Ainsi qu'on peut le voir sur la figure 1, un filtre pour la dépollution particulaire des fluides comprend traditionnellement, d'une part, un boîtier, désigné dans son ensemble par la référence 1, qui est constitué par une cuve 2 et une tête de filtre 3 et, d'autre part, un élément filtrant 4. La cuve 2 munie de l'élément filtrant est maintenue en position étanche, de façon connue en soi, sur la tête de filtre 3. L'élément filtrant 4 est, quant à lui, constitué d'une structure de résistance 5 et d'une matière filtrante 6 supportée par cette structure 5, comme représenté à la figure 2.

La structure de résistance 5 est généralement constituée par un noyau cylindrique 7, le plus souvent en une tôle perforée ou en un matériau plastique perforé, solidaire de deux coupelles, 8 et 9, situées chacune à une extrémité de ce noyau cylindrique 7. Ces coupelles sont munies de joints d'étanchéité 10 dont la nature, la forme et l'emplacement sont adaptés au montage prévu lors de la conception.

La matière filtrante 6 est en général pliée en accordéon et disposée de manière uniforme autour ou à l'intérieur du noyau cylindrique 7. Selon la méthode de fabrication mise en oeuvre, la matière filtrante peut être solidaire ou non des coupelles 8 et 9. Cette matière filtrante est de nature très diverse comme énoncé ci-dessus.

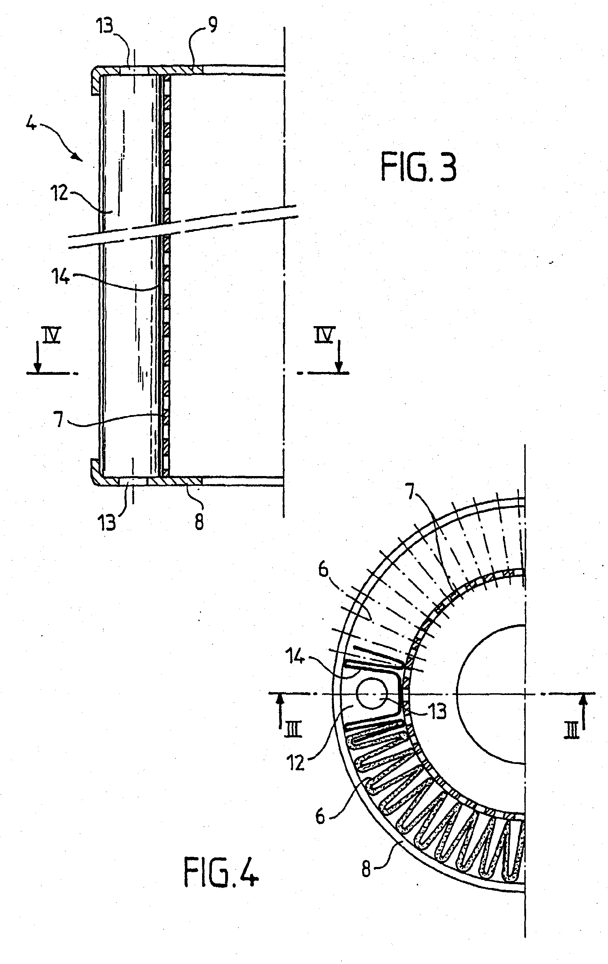

Cet ensemble de dépollution comprend, comme représenté aux figures 3 à 7b, au moins un détrompeur qui est composé d'une tige 11 coopérant avec un espace 12 ménagé dans la matière filtrante 6. Dans au moins une coupelle, 8 ou 9, est prévu un orifice 13 pour le passage de la tige 11.

Cet espace 12 peut être formé par un pli plus large de la matière filtrante 6 : ceci est obtenu par exemple en utilisant une agrafe à dos large 14 pour réunir les deux bords d'extrémité de la matière filtrante 6. Cette agrafe 14 crée ainsi un volume délimité par la forme de celle-ci et par les deux coupelles 8 et 9 (cf. figure 4).

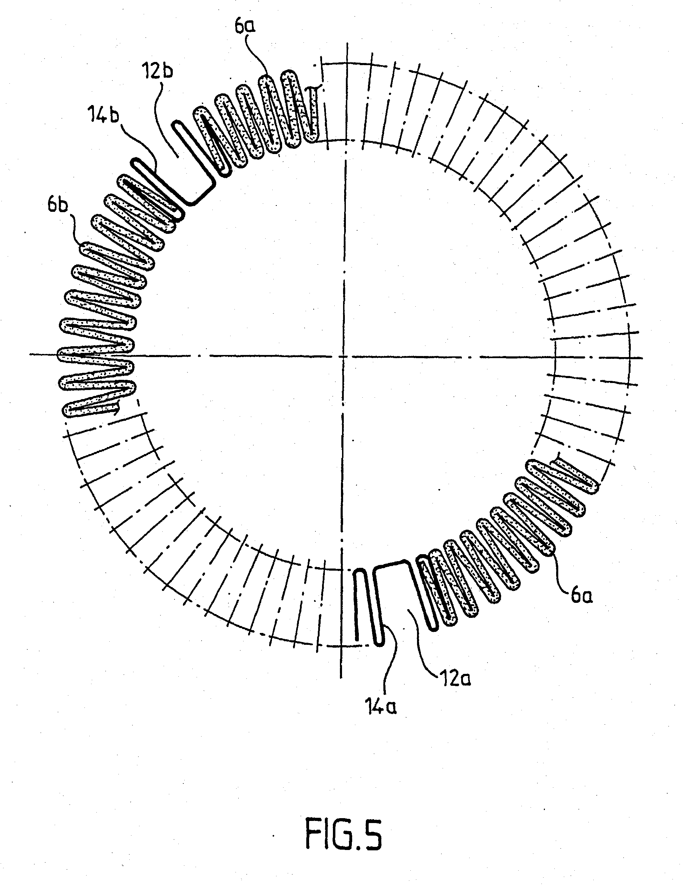

Selon une variante de réalisation représentée à la figure 5, la matière filtrante 6 peut être constituée de deux hémi-cylindres, 6a et 6b, de cette matière filtrante dont les bords d'extrémité sont réunis par deux agrafes à dos large, 14a et 14b, délimitant ainsi deux espaces 12a et 12b. Ceci sera notamment le cas lorsque l'on doit utiliser un élément filtrant présentant deux qualités différentes de filtration.

Dans cet exemple de réalisation, l'espace 12 est matérialisé par un tube fixé par ses extrémités sur les coupelles 8 et 9 et disposé au milieu de la matière filtrante 6 : par exemple entre deux plis de celle-ci, si elle est pliée en accordéon.

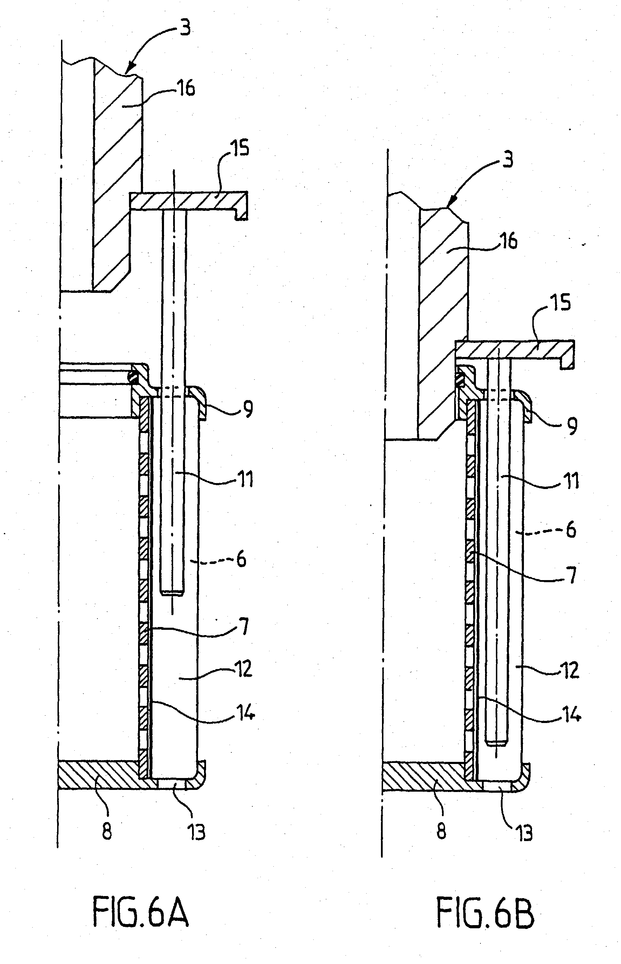

Selon un premier mode de réalisation notamment représenté aux figures 6a et 6b, la tige 11 est solidaire de la tête de filtre 3 : elle est par exemple rendue solidaire par une de ses extrémités d'une entretoise 15, dite entretoise porte-tige, qui est fixée de manière connue sur un manchon 16 que comporte toute tête de filtre 3. Bien évidemment, la tige 11 est parallèle à l'axe du filtre lui-même.

Lors du remplacement de l'élément filtrant 4, après avoir retiré le cuve 2, on désolidarise cet élément filtrant de la tête de filtre 3, puis on installe le nouvel élément filtrant 4 en faisant pénétrer la tige 11 dans le espace 12 et/ou l'orifice 13 : si cela n'est pas possible, ceci signifie que le nouvel élément filtrant ne convient pas.

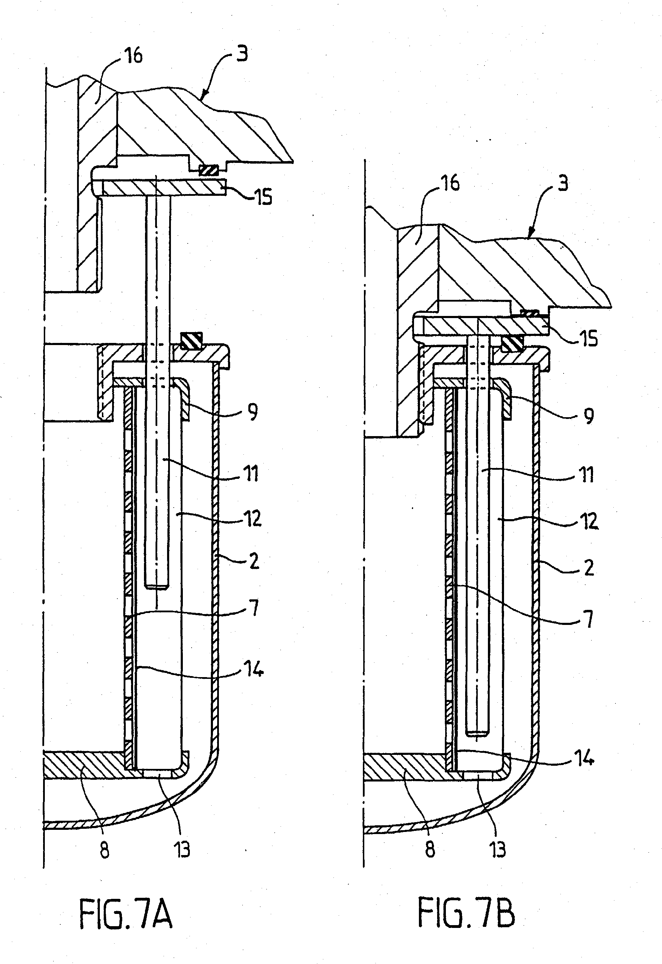

Dans le cas d'un sous-ensemble de filtration, constitué par la cuve et l'élément filtrant, qui doit être changé en entier, comme par exemple un filtre à visser représenté aux figures 7a et 7b, la tige 11 du détrompeur est solidaire d'une entretoise porte-tige 15 qui est montée libre en rotation et maintenue en position de façon connue en soi sur le manchon 16 sur lequel sera vissé cet élément de filtration.

L'élément filtrant 6 comprend un espace 12 comme un de ceux décrits précédemment et la coupelle en regard de l'entretoise porte-tige 15 comportes un orifice 13 correspondant à cet espace 12.

Lors de la mise en place de cet élément de filtration, on fait pénétrer la tige 11 dans l'espace 12 grâce à l'orifice 13 et on tourne le tout jusqu'à fixation de l'ensemble de dépollution sur le manchon 16.

Selon un second mode de réalisation, la tige 11 peut être fixée sur le fond de la cuve 2, en particulier dans le cas des filtres dits filtres-retour.

Ainsi qu'aura pu le comprendre l'homme du métier, un filtre pour la dépollution particulaire des fluides par filtration selon la présente invention peut être disposé sur toute conduite de fluide alimentant un moteur, une machine-outil ou tout autre appareil industriel ou domestique.

## Revendications

1. Filtre pour la dépollution particulaire des fluides, notamment dans le domaine de l'automobile, comprenant, d'une part, un boîtier (1) constitué d'une tête de filtre (3) et d'une cuve (2) montée de façon amovible et étanche sur celle-ci, et, d'autre part, un élément filtrant (4) situé dans ladite cuve (2) et constitué d'une structure de résistance (5) et d'une matière filtrante (6) supportée par ladite structure (5), deux coupelles (8, 9) étant disposées aux extrémités de ladite structure de résistance (5), **caractérisé par le fait qu'**il comprend au moins un détrompeur qui comprend une tige solidaire (11) du boîtier (1) et un espace (12) ménagé dans la matière filtrante (6) et dans lequel pénètre ladite tige (11) lors du montage de l'élément filtrant (4), dans au moins une coupelle (8 ou 9) étant prévu un orifice (13) pour le passage de ladite tige (11).

2. Filtre pour la dépollution selon la revendication 1, **caractérisé par le fait que** la matière filtrante est pliée en accordéon et que l'espace (12) est formé par un pli plus large que les autres plis de la matière filtrante (6).

3. Filtre pour la dépollution selon la revendication 2, **caractérisé par le fait que** l'on dispose au moins une agrafe à dos large (14) qui réunit les bords d'extrémité de la matière filtrante (6), afin de créer un volume délimité par la forme de celle-ci et par les deux coupelles (8 et 9).

4. Filtre pour la dépollution selon la revendication 1, **caractérisé par le fait que** l'espace (12) est matérialisé par un tube qui est fixé par une de ses extrémités sur une des coupelles (8 ou 9) et est disposé au milieu de la matière filtrante (6), l'autre extrémité dudit tube étant située en regard d'un orifice (13) ménagée dans l'autre coupelle.

5. Filtre pour la dépollution selon l'une quelconque des revendications 1 à 4, **caractérisé par le fait que** la tige (11) est rendue solidaire par une de ses extrémités d'une entretoise (15), dite entretoise porte-tige, qui est fixée de manière indémontable sur un manchon (16) que comporte la tête de filtre (3).

6. Filtre pour la dépollution selon l'une quelconque des revendications 1 à 4, **caractérisé par le fait que** la tige (11) est rendue solidaire de la cuve (2).

7. Elément filtrant pour filtre selon l'une quelconque des revendications 1 à 6, **caractérisé par le fait qu'**il est constitué d'une structure de résistance (5) et d'une matière filtrante (6) pliée en accordéon supportée par ladite structure (5), un espace (12) étant ménagé dans ladite matière filtrante (6) ledit espace (12) étant formé par un pli plus large que les autres plis de la matière filtrante (6).

8. Elément filtrant selon la revendication 7, **caractérisé par le fait que** l'on dispose au moins une agrafe à dos large (14) qui réunit les bords d'extrémité de la matière filtrante (6), afin de créer un volume.

9. Elément filtrant pour filtre selon la revendication 7 ou la revendication 8, **caractérisé par le fait que** l'espace (12) est matérialisé par un tube qui est fixé par une de ses extrémités sur une des coupelles (8 ou 9) et est disposé au milieu de la matière filtrante (6), l'autre extrémité dudit tube étant située en regard d'un orifice (13) ménagé dans l'autre coupelle.

## Claims

1. Filter for particle decontamination of fluids, especially in the automotive field, comprising on one hand a housing (1) composed by a filter head (3) and a bowl (2) assembled in a detachable and sealed way, and on the other hand a filter element (4), located in said bowl (2), containing a resistance structure (5) and a filter media (6) supported by the said resistance structure (5), two end caps (8, 9) being disposed on both ends of the said resistance structure (5) **characterized by** the fact that it contains at least one safety device which comprises a pin (11) fixed on the housing (1) and a volume (12) created in the filter media (6) and which in penetrates the said pin (11) when mounting the filter element (4), on at least one of the end caps (8 or 9) existing a hole (13) allowing the pin (11) to penetrate.

2. Filter for particle decontamination according to claim 1, **characterized by** the fact that the filter media is pleated and that the volume (12) is formed by a larger fold than the other of the filter media (6).

3. Filter for particle decontamination according to claim 2, **characterized by** the fact that one sets at least one large clip (14) which joins the ends of the filter media (6) in order to create a volume delimited by the own shape of this media and by the two end caps (8 and 9).

4. Filter for particle decontamination according to claim 1, **characterized by** the fact that the volume (12) is delimited by a tube which is fixed at one of its ends on one of the end caps (8 or 9), and is located in the midst of the filter media (6), the other end of the said tube being located facing a hole (13) existing in the other end cap.

5. Filter for particle decontamination according to any of the claims 1 to 4, **characterized by** the fact that the pin (11) is fixed at one of its ends on a brace (15), called pin-holding brace, fixed with a slave (16) existing in the filter head (3).

6. Filter for particle decontamination according to any of the claims 1 to 4, **characterized by** the fact that the pin (11) is fixed with the bowl (2).

7. Filter element for filters according to any of the claims 1 to 6, **characterized by** the fact that it is constituted by a mechanical resistance structure (5) and by a pleated filter media (6) supported by said resistance structure (5), a volume (12) being delimited inside said filter media (6), said volume (12) being created by a larger fold than the other of the filter media (6).

8. Filter element for filters according to claim 7, **characterized by** the fact that one sets at least one large clip (14) joining the two ends of the filter media (6) in order to delimit a volume.

9. Filter element for filters according to claims 7 or 8, **characterized by** the fact that the volume (12) is delimited by a tube fixed at one of its ends on one of the end caps (8 or 9), and is located in the midst of the filter media (6), the other end of said tube being located facing a hole (13) existing in the other end cap.

## Patentansprüche

1. Filter für die Festpartikelausscheidung in Fluiden, insbesondere im Automobilbereich, bestehend einerseits aus einem Filtergehäuse (1) zusammengesetzt aus einem Filterkopf (3) und einem Filtertopf (2) dicht und in zerlegbarer Weise miteinander verbunden, andererseits aus einem Filterelement (4), der sich im Filtertopf (2) befindet und der aus einem tragenden Teil (5) und einem darauf sich stützenden Filtermaterial (6) besteht, mit je einer Endscheibe, (8 und 9) an den beiden Enden versehen, **dadurch gekennzeichnet, dass** er mindestens einen Kopienschutz enthält bestehend aus einem Stab (11), der mit dem Filtergehäuse (1) fest verbunden ist, und aus einem Hohlraum (12) im Filtermaterial (6), in den bei der Montage des Filterelementes (4) der genannte Stab (11) hineinpasst; in mindestens einer der Endscheiben, (8 oder 9) besteht eine Durchgangsbohrung (13) für die Führung des genannten Stabes (11).

2. Filter für die Festpartikelausscheidung entsprechend dem Anspruch 1 **dadurch gekennzeichnet, dass** das Filtermaterial gefaltet ist und dass der Hohlraum (12) durch eine Faltentasche mit vergrössertem Faltenabstand des Filtermaterials (6) gebildet wird.

3. Filter für die Festpartikelausscheidung entsprechend dem Anspruch 2 **dadurch gekennzeichnet, dass** mindestens eine Flachklammer (14) eingesetzt wird, die die beiden Enden des Filtermaterials (6) miteinander verbindet um einen Hohlraum zu bilden, der durch die eigene Form und durch die beiden Endscheiben (8 und 9) abgegrenzt wird.

4. Filter für die Festpartikelausscheidung entsprechend dem Anspruch 1 **dadurch gekennzeichnet, dass** der Hohlraum (12) durch ein Rohrstück verwirklicht wird, das an einem Ende an einer Endscheibe, (8 oder 9), befestigt wird und innerhalb des Filtermaterials (6) liegt, am anderen stehen sich der Rohrquerschnitt und die Durchgangsbohrung (13) in der anderen Endscheibe gegenüber.

5. Filter für die Festpartikelausscheidung entsprechend den Ansprüchen 1 bis 4 **dadurch gekennzeichnet, dass** der Stab (11) an der Trennplatte (15) befestigt wird, die selbst auf dem Stutzen (16) des Filterkopfes (3) fest montiert ist.

6. Filter für die Festpartikelausscheidung entsprechend den Ansprüchen 1 bis 4 **dadurch gekennzeichnet, dass** der Stab (11) im Filtertopf (2) befestigt ist.

7. Filterelement für Filter für Festpartikelausscheidung entsprechend den Ansprüchen 1 bis 6 **dadurch gekennzeichnet, dass** es aus einem tragenden Teil (5) und einem darauf sich stützenden gefalteten Filtermaterial (6) besteht und einen Hohlraum (12) im Filtermaterial (6) enthält, das durch eine Faltentasche mit vergrössertem Faltenabstand des Filtermaterials (6) gebildet wird.

8. Filterelement für Filter für Festpartikelausscheidung entsprechend dem Anspruch 7 **dadurch gekennzeichnet, dass** mindestens eine Flachklammer (14) eingesetzt wird, die die beiden Enden des Filtermaterials (6) miteinander verbindet um einen Hohlraum (12) zu bilden, der durch die eigene Form und durch die beiden Endscheiben (8 und 9) abgegrenzt wird.

9. Filterelement für Filter für Festpartikelausscheidung entsprechend dem Anspruch 7 oder 8 **dadurch gekennzeichnet, dass** der Hohlraum (12) durch ein Rohrstück verwirklicht wird, das an einem Ende an einer Endscheibe (8 oder 9), befestigt wird und innerhalb des Filtermaterials (6) liegt ; am anderen stehen sich der Rohrquerschnitt und die Durchgangsbohrung (13) in der anderen Endscheibe gegenüber.
